(19) **Europäisches Patentamt / European Patent Office / Office européen des brevets**

(11) **EP 4 615 027 A1**

(12) **EUROPEAN PATENT APPLICATION**
published in accordance with Art. 153(4) EPC

(43) Date of publication:
**10.09.2025 Bulletin 2025/37**

(21) Application number: **22966559.1**

(22) Date of filing: **23.11.2022**

(51) International Patent Classification (IPC):
*H04W 12/67* (2021.01)    *H04W 12/37* (2021.01)
*H04W 12/03* (2021.01)    *H04W 12/10* (2021.01)
*H04W 8/24* (2009.01)

(52) Cooperative Patent Classification (CPC):
**H04W 8/24; H04W 12/03; H04W 12/10;**
**H04W 12/37; H04W 12/67**

(86) International application number:
**PCT/KR2022/018651**

(87) International publication number:
**WO 2024/111698 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: Samsung Electronics Co., Ltd.
**Suwon-si, Gyeonggi-do 16677 (KR)**

(72) Inventors:
• **JE, Donghyun**
  **Suwon-si, Gyeonggi-do 16677 (KR)**
• **KIM, Dongmyung**
  **Suwon-si, Gyeonggi-do 16677 (KR)**
• **CHO, Sunwoo**
  **Suwon-si, Gyeonggi-do 16677 (KR)**

(74) Representative: **Nederlandsch Octrooibureau**
**P.O. Box 29720**
**2502 LS The Hague (NL)**

(54) **SECURITY SETTING METHOD AND APPARATUS USING SECURITY STRENGTH IN WIRELESS COMMUNICATION SYSTEM**

(57) The present disclosure relates to a security setting method and apparatus using security strength (SS) in a wireless communication system, and a method performed by a base station for a security setting in a wireless communication system, according to an embodiment of the present disclosure, comprises the steps of: receiving security policy information from a network entity that manages a session of a terminal; receiving terminal security capability information from the terminal; identifying first security strength supported by the terminal on the basis of the security policy information and the security capability information; and performing a security activation procedure with the terminal if the first security strength is greater than second security strength required in a network.

FIG. 2

EP 4 615 027 A1

**Description**

[Technical Field]

The disclosure relates to a method and an apparatus for configuring security for data traffic in a wireless communication system.

[Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100$\mu$sec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

[Detailed Description of the Invention]

[Technical Problem]

The disclosure provides a method and an apparatus for security configuration using a security strength (SS) in a wireless communication system.

In addition, the disclosure provides a method and an apparatus for security configuration using a security strength and a UE security capability in a wireless communication system.

Additionally, the disclosure provides a method and an apparatus for determining a security strength from the viewpoint point of a data radio bearer, based on a security strength of data traffic and a security strength required by a network in a wireless communication system.

[Technical Solution]

According to an embodiment of the disclosure, a method performed by a base station for security configuration in a wireless communication system includes receiving security policy information from a network entity managing a session of a UE, receiving UE security capability information from the UE, identifying a first security strength supported by the UE, based on the security policy information and the security capability information, and performing a security activation procedure with the UE in case that the first security strength is greater than a second security strength required by a network.

Further, according to an embodiment of the disclosure, a base station in a wireless communication system includes a transceiver, a communication interface, and a processor configured to receive, through the communication interface, security policy information from a network entity managing a session of a UE, receive UE security capability information from the UE through the transceiver, identify a first security strength supported by the UE, based on the security policy information and the security capability information, and perform a security activation procedure with the UE through the transceiver in case that the first security strength is greater than a second security strength required by a network.

In addition, according to an embodiment of the disclosure, a method performed by a UE for security configuration in a wireless communication system includes transmitting UE security capability information of the UE to a base station that receives security policy information from a network entity managing a session of the UE, and performing a security activation procedure with the base station in response to a case in which a first security strength supported by the UE is greater than a second security strength required by a network.

In addition, according to an embodiment of the disclosure, a UE in a wireless communication system includes a transceiver, and a processor configured to transmit, through the transceiver, UE security capability information of the UE to a base station that receives security policy information from a network entity managing a session of the UE, and perform a security activation procedure with the base station through the transceiver in response to a case in which a first security strength supported by the UE is greater than a second security strength required by a network.

[Brief Description of Drawings]

FIG. 1 illustrates an example of a configuration of a wireless communication system according to an embodiment of the disclosure;

FIG. 2 illustrates a security configuration method using security strength (SS) in a wireless communication system according to an embodiment of the disclosure;

FIG. 3 illustrates a method of applying security strength (SS) according to an embodiment of the disclosure;

FIG. 4 illustrates a handshake process for identifying cryptographic/security methods between a client and a server according to an embodiment of the disclosure;

FIG. 5 illustrates an example of a security configuration method using security strength (SS) in a wireless communication system according to an embodiment of the disclosure;

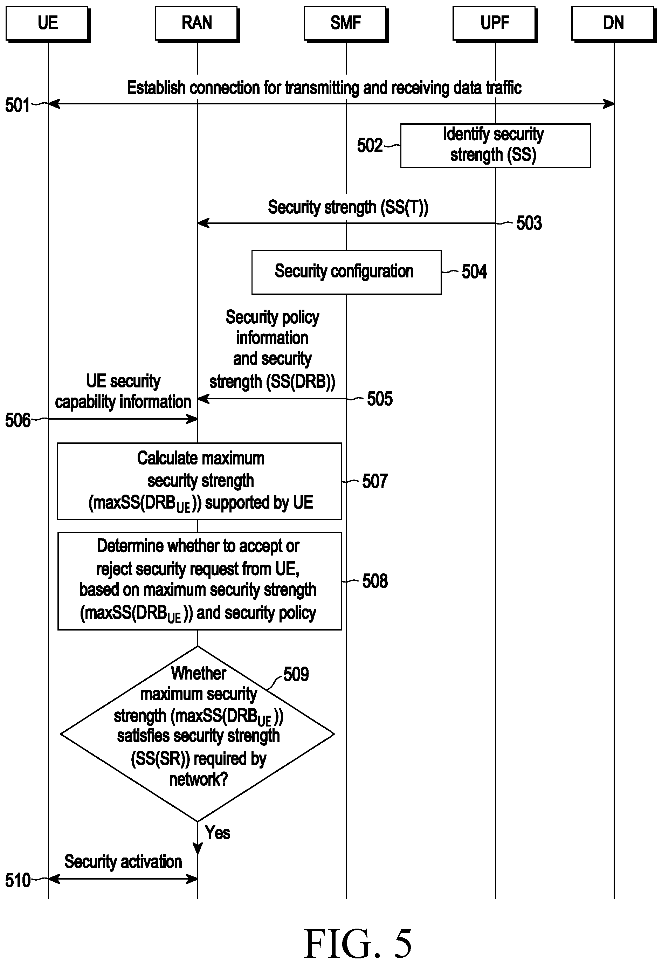

FIG. 5 illustrates another example of a security configuration method using security strength (SS) in a wireless communication system according to an embodiment of the disclosure;

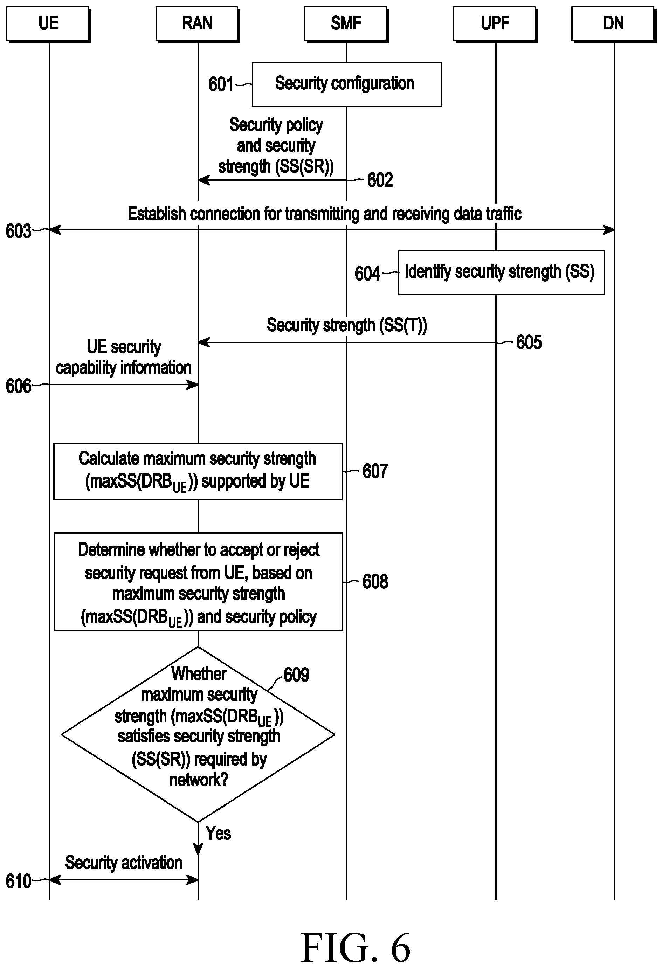

FIG. 6 illustrates another example of a security configuration method using security strength (SS) in a wireless communication system according to an embodiment of the disclosure;

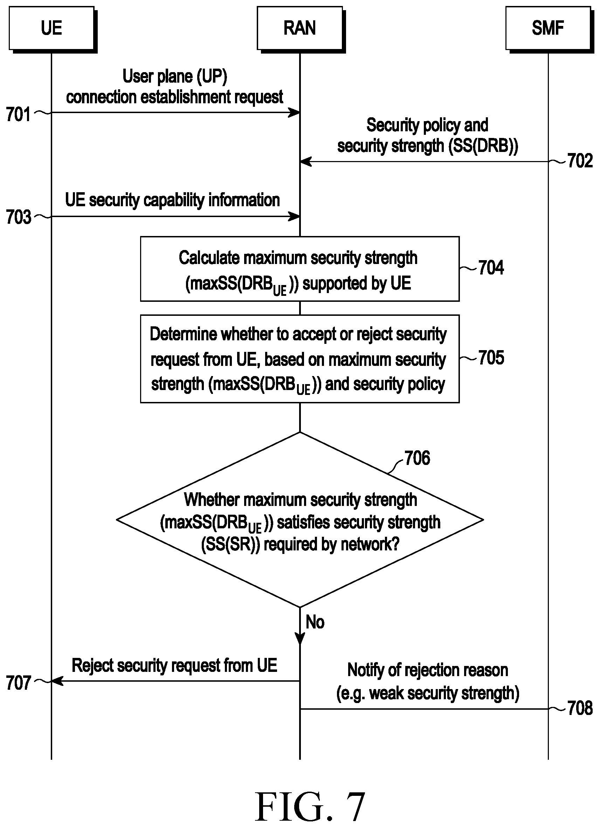

FIG. 7 illustrates a security request rejection operation in a security configuration method using security strength (SS) in a wireless communication system according to an embodiment of the disclosure;

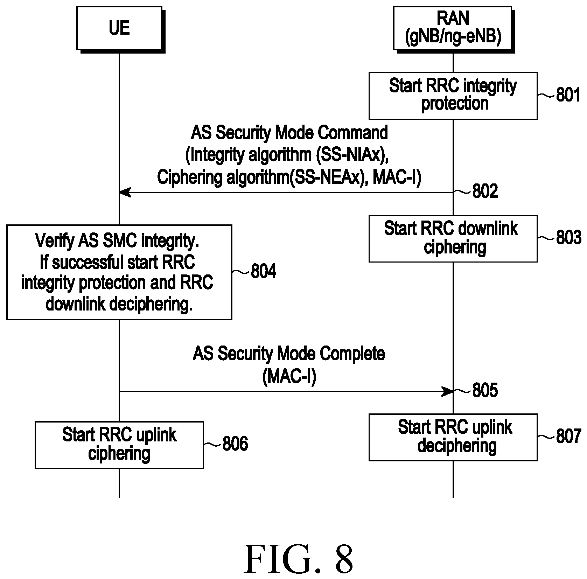

FIG. 8 illustrates a security activation procedure between a UE and a base station in a security configuration method using security strength (SS) in a wireless communication system according to an embodiment of the disclosure; and

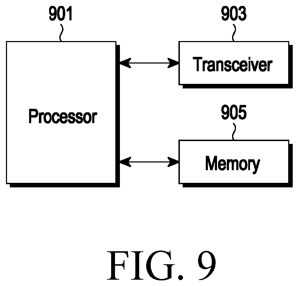

FIG. 9 illustrates an example of a configuration of a network entity in a wireless communication system according to an embodiment of the disclosure.

[Mode for Carrying out the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help understanding of the disclosure and the disclosure is not limited to configurations or arrangements illustrated in the drawings of the disclosure. In addition, a detailed description of known functions or configurations that may make the subject matter of the disclosure unclear will be omitted. It should be noted that in the following description of the disclosure, only parts necessary for understanding operations according to various embodiments of the disclosure will be described and descriptions of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

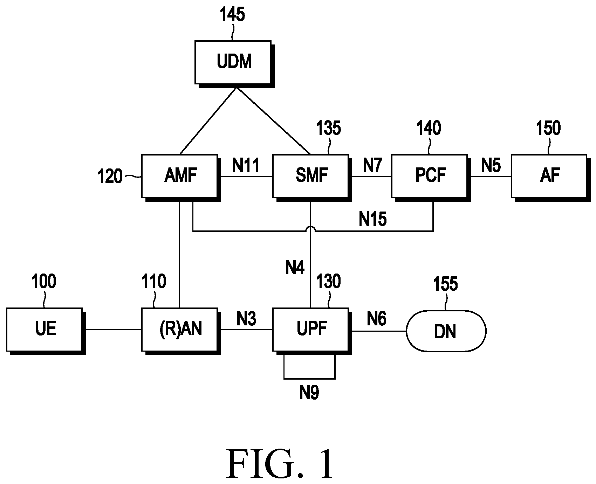

In the disclosure, network technology may refer to standard specifications (e.g., TS 23.501, TS 23.502, TS 23.503, etc.) defined by the international telecommunication union (ITU) or 3GPP, and elements included in the network structure of FIG. 1 described below may refer to physical entities or refer to software performing individual functions or hardware combined with software. In the drawings, the reference symbols denoted by Nx, such as N1, N2, N3, etc., represent known interfaces between NFs in a 5G core network (CN).

FIG. 1 illustrates an example of a configuration of a wireless communication system according to an embodiment of the disclosure.

The system of FIG. 1 may include a 5G core network (5GC), a radio access network ((R)AN) 110, and a UE 100. The 5GC may include an access and mobility management function (AMF) 120 that manages mobility of the UE 100, a session management function (SMF) 135 that manages a session, a user plane function (UPF) 130 connected to a data network (DN) 155 to perform a data forwarding function, a policy control function (PCF) 140 that provides a policy control

**EP 4 615 027 A1**

function, a user data management (UDM) 145 that provides a function of managing data, such as subscriber data and policy control data, a unified data repository (UDR) (not shown) that stores data on various network functions (NFs) such as the UDM, a network slice selection function (NSSF) (not shown) that selects a network slice instance serving the UE 100, and a network slice admission control function (not shown) that monitors and controls the number of registered UEs in a network slice(s) and the number of PDU sessions.

The (R)AN 102 may refer collectively to a radio access network that can support evolved E-UTRA, which is an evolved version of 4G wireless access technology, and/or new radio access technology (NR) (e.g., gNB). The gNB supports functions for radio resource management (i.e., radio bearer control, radio admission control, connection mobility control, dynamic allocation (i.e., scheduling) of resources to the UE 100 in uplink/downlink), Internet protocol (IP) header compression, integrity protection and encryption of user data stream, selection of the AMF 120 at the attachment of the UE 100 when no routing to the AMF 120 is determined from the information provided by the UE, routing of user plane data towards the UPF 130, routing of control plane information towards the AMF 120, connection setup and release, scheduling and transmission of paging messages (originated from the AMF), scheduling and transmission of system broadcast information (originated from the AMF or operating and maintenance (O&M)), measurement and measurement reporting configuration for mobility and scheduling, transport level packet marking in the uplink, session management, support of network slicing, QoS flow management and mapping to data radio bearers, support of the UE 100 in an inactive mode, distribution function for NAS messages, NAS node selection function, radio access network sharing, dual connectivity, tight interworking between NR and E-UTRA, and the like. Additionally, the RAN 110 may be referred to as a base station.

The UE 100 refers to a user equipment. The UE 100 may also be referred to by terms such as a terminal, a mobile equipment (ME), a mobile station (MS), etc. Additionally, the UE 100 may be a portable device such as a laptop, a mobile phone, a personal digital assistant (PDA), a smartphone, or a multimedia device, or may be a non-portable device such as a personal computer (PC) or a vehicle-mounted device.

An application function (AF) 150 that provides an application service communicates with the 5GC. The AMF 120 is an entity that manages access and mobility of the UE 100. For example, the AMF 120 may perform a network function, such as registration, connection, reachability, mobility management, access identification, authentication, and mobility event generation of the UE 100.

The SMF 135 may perform a function of managing a PDU session of the UE 100. For example, the SMF 135 may perform a network function, such as a session management function through establishing, modifying, and releasing a session, a function of allocating and managing an Internet protocol (IP) address of the UE 100, and user plane (UP) selection and control. In addition, the SMF 135 may be managed by a different SMF for each session when the UE 100 has multiple sessions. Specifically, the SMF 135 supports functions, such as session management (e.g., session setup, modification and release including the maintenance of a tunnel between the UPF 130 and the (R)AN node), UE IP address allocation and management (optionally including authentication), the selection and control of the user plane (UP) function, a traffic steering configuration for routing traffic from the UPF 130 to a proper destination, the termination of an interface toward policy control functions, the execution of the control part of a policy and quality of service (QoS), lawful interception (LI) (for an SM event and an interface to an LI system), the termination of the SM part of an NAS message, downlink data notification, the initiator of access network (AN)-specific SM information (transferred to the (R)AN through N2 via the AMF 103), the determination of a session and service continuity (SSC) mode of a session, and a roaming function. Some or all of the functions of the SMF 135 may be supported within a single instance of one SMF.

The UPF 130 may perform a data processing function of delivering data transmitted by the UE 100 to the DN 155, which is an external network, or delivering data received from the DN 155 to the UE 100. Further, the UPF 130 may perform a network function, such as the role of an anchor between radio access technologies (RATs), provision of a connection between a PDU session and the AF 150, packet routing and forwarding, packet inspection, application of a user plane policy, traffic usage report writing, and buffering. The UPF 130 transfers a downlink PDU, received from a DN 155, to the UE 100 via the (R)AN 110 and transfers an uplink PDU, received from the UE 100, to a DN 155 via the (R)AN 110. Specifically, the UPF 130 supports functions, such as an anchor point for intra/inter RAT mobility, the external PDU session point of interconnection to a data network, lawful interception, a traffic usage report, an uplink classifier for supporting the routing of traffic flow to a data network, a branching point for supporting a multi-home PDU session, QoS handling (e.g., the execution of packet filtering, gating, and an uplink/downlink rate) for a user plane, uplink traffic verification (SDF mapping between a service data flow (SDF) and a QoS flow), transport level packet marking within the uplink and downlink, downlink packet buffering, and a downlink data notification triggering function. Some or all of the functions of the UPF 130 may be supported within a single instance of one UPF.

The PCF 140 may manage operator policy information for providing a service in the 5G system, and the UDM 145 may perform functions of generating authentication information for 3GPP security, managing a list of network functions (NF) supporting the UE 100, and managing subscription information. In 3GPP systems, conceptual links connecting NFs in the 5G system are defined as reference points. Next, reference points included in the 5G system architecture of FIG. 1 will be exemplified below. For the sake of descriptive convenience, some reference points are not shown in FIG. 1.

- N1: a reference point between a UE and an AMF
- N2: a reference point between an (R)AN and an AMF
- N3: a reference point between an (R)AN and a UPF
- N4: a reference point between an SMF and a UPF
- N5: a reference point between a PCF and an AF
- N6: a reference point between a UPF and a DN
- N7: a reference point between an SMF and a PCF
- N8: a reference point between a UDM and an AMF
- N9: a reference point between two core UPFs
- N10: a reference point between a UDM and an SMF
- N11: a reference point between an AMF and an SMF
- N12: a reference point between an AMF and an AUSF
- N13: a reference point between a UDM and an authentication server function (AUSF)
- N14: a reference point between two AMFs
- N15: a reference point between a PCF and an AMF for a non-roaming scenario, and a reference point between a PCF and an AMF in a visited network for a roaming scenario

The disclosure may be applied in a communication environment in which a security policy and/or security algorithm is applied to protect user plane (UP) traffic (hereinafter referred to as UP traffic, user traffic, or data traffic) in a wireless communication system having a configuration as shown in FIG. 1, for example.

When security is applied to user-plane data traffic in a wireless communication system, the data traffic may be vulnerable to security if a low-security cryptographic algorithm is used. In a wireless communication system, data traffic may be transmitted to a UE with or without ciphering applied on the application layer. In case that security (or UP security) is not configured on the application layer for data traffic, or even if security is configured for the data traffic but a security algorithm of a relatively lower level than the required security requirements is configured, the data traffic may be forged, modified, or eavesdropped by hackers or the like.

Therefore, at the time of applying security to data traffic, a scheme capable of applying security with relative strength depending on the type of traffic is required. The disclosure proposes a method and an apparatus for security configuration using security strength (SS) in a wireless communication system. The disclosure provides various schemes in which the security strength (SS) that can be applied to data traffic is defined, and a suitable security strength (SS) is configured for each data traffic by considering the requirement of security strength (SS). In the disclosure, a network entity (e.g., SMF) of a core network may configure, in the base station, a security policy indicating whether ciphering/security is applied/activated/required for data traffic to protect data traffic. The base station may apply security to data traffic in case that the security policy indicates that security is required. Alternatively, the base station may not apply security to data traffic in case that the security policy indicates that security is not required. Additionally, in the disclosure, in case that the security policy indicates that security is required, the base station may instruct, based on the UE security capability of each UE, the UE to use a suitable security algorithm. In addition, in the disclosure, the security strength (SS) may be applied to an application layer security protocol (e.g., transport layer security (TLS), datagram TLS (DTLS), etc.).

Based on the security strength (SS) proposed in the disclosure, a suitable security policy and/or security algorithm may be configured for data traffic.

In the disclosure, the security strength (SS) may be defined as the amount of work (e.g., may be expressed in terms of the number of bits) required to decrypt an encryption key in a cryptographic algorithm or cryptographic system. For example, in case that a 4-digit password (such as a personal identification number (PIN) number) is configured as an encryption key in a smartphone, the amount of work required to decrypt the PIN number is $10^4$ (about $2^{13}$), and thus the security strength (SS) of the PIN number may be expressed as 13 bits. In an example, the security strength (SS) may be expressed as one of the number of bits, such as {80, 112, 128, 192, 256, ... } and when, for example, advanced encryption standard (AES)-128 or Rivest-Shamir-Adleman (RSA)-1024, known as a security algorithm, is applied to data traffic, the amount of work required to decrypt the encryption key is $2^{128}$ or $2^{80}$ and thus the security strength (SS) of AES-128 or RSA-1024 may be expressed as 128 bits or 80 bits, respectively.

In the disclosure, as shown in [Equation 1] below, the security strength (SS(DRB)) from the viewpoint of the data radio bearer (DRB) of the UE may be defined as a function of using the security strength (SS(UP)) from the viewpoint point of the user plane (UP) of the wireless communication system and the security strength (SS(T)) of data traffic. The security strength (SS(DRB)), the security strength (SS(UP)), and the security strength (SS(T)) may be referred to as the first security strength, the second security strength, and the third security strength, respectively, for convenience of explanation. The security strength (SS(security requirement (SR))) required by the network may be referred to as the fourth security strength. The first to fourth security strengths are shown for convenience of classification, and include various names used to represent the security strength (SS(DRB)), the security strength (SS(UP)), the security strength (SS(T)), and the security strength (SS(SR)).

[Equation 1]

$$SS(DRB_{i,j}) = function(SS(UP_i), SS(T_j))$$

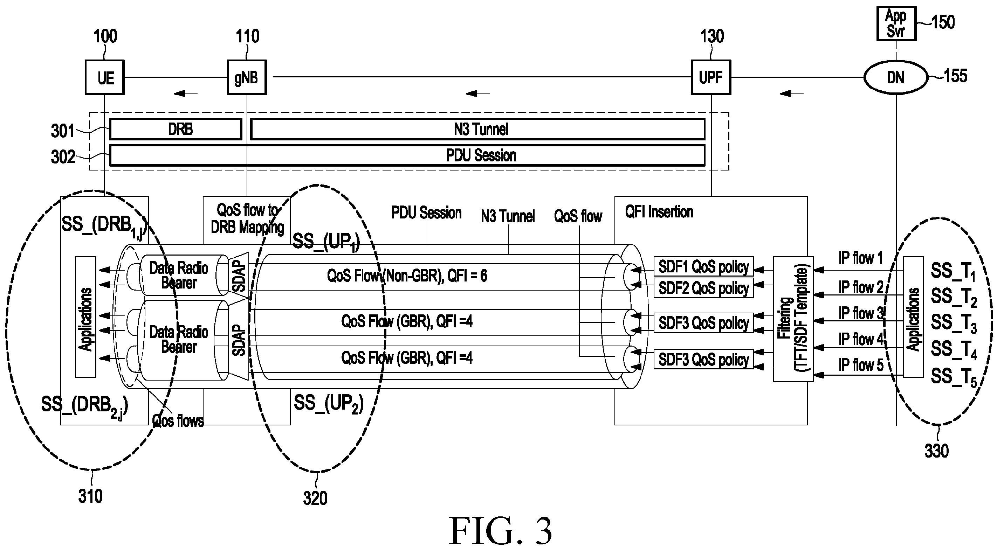

FIG. 3 illustrates a method of applying security strength (SS) according to an embodiment of the disclosure. Referring to FIG. 3, it is assumed that a situation in which a connection for transmitting and receiving data traffic has been established between the UE 100 and the application server 150. In this case, a DRB 301 is established to deliver data traffic between the UE 100 and the base station 110, and a tunnel is established to deliver data traffic between the base station 110 and the UPF 130. In addition, a PDU session is established between the UE 100 and the UPF 130. The example in FIG. 3 illustrates a case in which five different types of data traffic are delivered to one UE 100, and the five types of data traffic are delivered to the UE 100 through two DRBs. When UP security is applied to each DRB, the number of UP securities may correspond to the number of DRBs. As another example, the number of UP securities may correspond to the number of PDU session(s) established between the UE 100 and the UPF 130.

FIG. 3 assumes a situation, for example, in which data traffic provided from the application server 150 is classified into five different traffic types T1 to T5, and IP flows (IP flow 1 to IP flow 5) corresponding to the traffic (T1 to T5) are delivered to the core network of the wireless communication system. The IP flows (IP flow 1 to IP flow 5) may correspond to at least one QoS flow for user plane (UP) data transfer in a section between the base station 110 and the UPF 130. The at least one QoS flow may be identified as QoS flow identification (QFI). Further, the at least one QoS flow may be mapped to at least one DRB. In the example of FIG. 3, the security strength ($SS(DRB_{i,j})$) 310 (where i is an index for classifying the user plane ($UP_i$), and j is an index for classifying data traffic ($T_j$)) from the viewpoint point of the DRB of the UE may be defined as a function of the security strength ($SS(UP_i)$) 320 from the viewpoint point of the user plane ($UP_i$) and the security strength ($SS(T_j)$) 330 of the data traffic ($T_j$), as shown in [Equation 1] above. For the convenience of the following explanation, the classification of i and j is omitted in the above [Equation 1]. Here, the function (A, B) may represent, for example, the maximum value or the minimum value of A and B, or the sum, difference, or product of A and B, and may be expressed in various forms, such as a formula in which different weights are applied to A and B, depending on the type of each cryptographic algorithm applied to A and B and a combination of each algorithm.

In the disclosure, the base station may receive the security strength (SS(T)) of data traffic from the UPF and calculate the security strength (SS(UP)) from the viewpoint point of the UP. In addition, the base station may obtain/calculate the security strength (SS(DRB)), based on the security strength (SS(T)) and the security strength (SS(UP)), as shown in [Equation 1]. Then, the base station compares the magnitude of the security strength (SS(DRB)) with the magnitude of the security strength (SS(SR)) required by the network, and as shown in [Equation 2] below, if the security strength (SS(DRB)) is greater than the security strength (SS(SR)), the base station may determine that sufficient security has been configured for the data traffic of the UE (i.e., it is determined to be secure), and if the security strength (SS(DRB)) is less than the security strength (SS(SR)), the base station may determine that insufficient security has been configured for the data traffic of the UE (i.e., it is determined to be unsecure). In case that the security strength (SS(DRB)) is equal to the security strength (SS(SR)), the base station may determine the case as one of the two cases above.

[Equation 2]

$$Secure, \quad if\ SS(SR) < SS(DRB)$$
$$Unsecure, \quad if\ SS(SR) > SS(DRB)$$

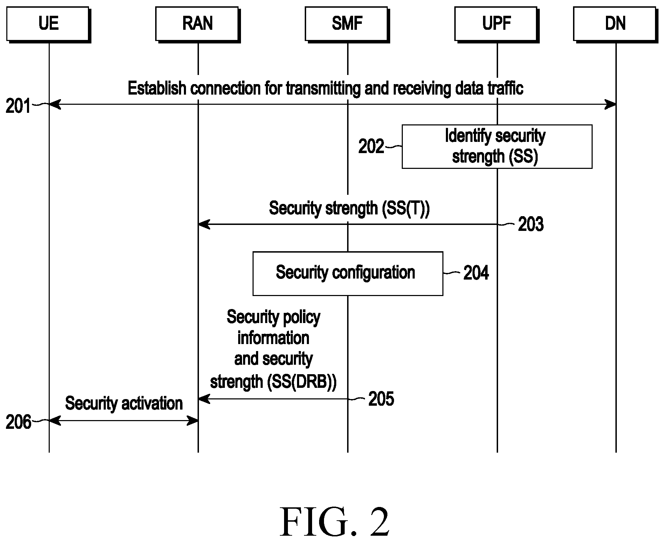

FIG. 2 illustrates a security configuration method using security strength (SS) in a wireless communication system according to an embodiment of the disclosure. The basic functions of the network entities shown in FIG. 2 are the same as those of the corresponding network entities in FIG. 1. The embodiment of FIG. 2 will be described with reference to the description of FIG. 3 above.

Referring to FIG. 2, in operation 201, the UE establishes a connection for transmitting and receiving data traffic to and from an external data network (DN). In operation 202, the UPF may decode security protocol(s) to identify/recognize the security strength (SS) to be applied to the data traffic. The security strength (SS) may be identified/recognized from a cipher suite of security protocol(s) to secure the network connection. The cipher suite may be understood as a set of cryptographic/security methods, such as a key exchange method, a cryptographic method, a message authentication code (MAC), and the like. When "TLS_ECDHE_RSA_WITH_AES_128_GCM_SHA256" is assumed as an example of the cipher suite, "TLS" is a security protocol, "ECDHE" (Diffie Hellman method supporting elliptic curve and Ephemeral) is a key exchange method being used, "RSA" is a cryptographic method using an asymmetric key, "AES_128" is a cryptographic method using a 128-bit symmetric key, "Galois/counter mode (GCM)" is a block cryptographic method, and "SHA256" is an example of a message authentication (integrity) code using a hash function. The "TLS_ECDHE_RSA_WITH_AES_128_GCM_SHA256" represents an example, and the disclosure is not limited to the cipher suite illustrated above. The cipher suite may use a combination of various known cryptographic/security methods.

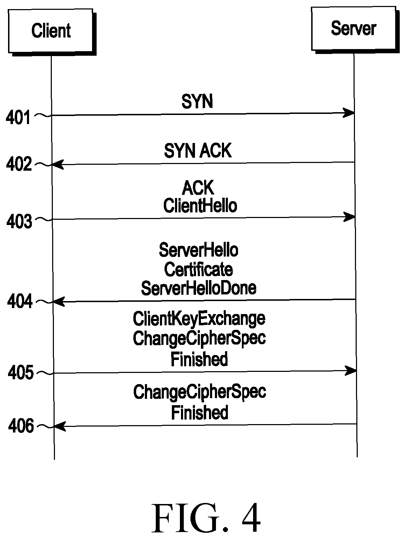

In the disclosure, the network entity (e.g., UPF) of the base station (RAN) and the core network may identify/recognize the security strength (SS(T)) of data traffic by using the function of the cipher suite, as shown in [Equation 3] below. At this time, the base station and network entity (e.g., UPF) may identify/recognize the security strength (SS(T)) of data traffic during a handshake process for identifying cryptographic/security methods between a client and a server, as an example of operation 401 to 406 of FIG. 4. In FIG. 4, the client and the server may be a UE and an application server connected via a DN in FIG. 2, respectively. In the handshake process in FIG. 4, the client may transmit a list of one or multiple supportable cipher suites to the server, and the server may select one cipher suite from the list to provide the UE with relevant information to secure data traffic. In FIG. 2, at least one of the base station, the SMF, and the UPF is not shown in FIG. 4, but a cipher suite selected for securing data traffic with respect to the UE during a signaling process for the client-server handshake of FIG. 2 may be identified.

$$[Equation\ 3]$$
$$SS(T) = \text{function(Ciphersuite\_T)}$$

In [Equation 3] above, "ciphersuite_T" is a cipher suite selected to secure data traffic with respect to the UE.

In operation 203, the UPF transmits the security strength (SS(T)) of data traffic identified in operation 202 to the base station and/or the SMF. Further, in operation 204, the SMF may configure a security policy and a security algorithm (method) that may be applied to the UE, based on the security strength (SS(T)) of data traffic and the security strength (SS(SR)) required by the network. At this time, based on the security strength (SS(SR)) and the security strength (SS(UP)) from the viewpoint point of the UP of the UE, the SMF may configure the security strength (SS(UP)) such that the security strength (SS(DRB)) from the viewpoint point of the DRB is greater than the security strength (SS(SR)). In operation 205, the base station may receive the configured security policy information and security strength (SS(DRB)) from the SMF, and in operation 206, the base station may perform the procedure for security activation with the UE, based on at least one of the configured security policy information and security strength (SS(UP)), the security strength requirements (SS(SR)), and the security strength (SS(DRB)) of the DRB (UP or PDU session). In the security activation procedure, the base station may provide the UE with at least one of the integrity algorithm information and the cryptographic algorithm information. The UE may transmit and receive data traffic to and from the application server in a stable and secure state by using at least one of the integrity algorithm information and the cryptographic algorithm information.

FIG. 5 illustrates an example of a security configuration method using security strength (SS) in a wireless communication system according to an embodiment of the disclosure.

The embodiment of FIG. 5 is proposed by adding, to the example of FIG. 2, a scheme in which a base station determines/identifies/calculates the maximum security strength (max(SS(DRB$_{UE}$)) that can be supported by a UE in consideration of the UE security capability, and in which, when the maximum security strength (max(SS(DRB$_{UE}$)) satisfies the security strength (SS(SR)) required by the network, security is activated for the data traffic of the UE.

Referring to FIG. 5, operations 501 to 505 may be performed in the same manner as operations 201 to 505 of FIG. 2. In operation 501, the UE establishes a connection for transmitting and receiving data traffic to and from an external data network (DN). In operation 502, the UPF may decode security protocol(s) to identify/recognize the security strength (SS(T)) to be applied to data traffic. The security strength (SS(T)) may be applied differently for each data traffic. The security strength (SS(T)) may be identified/recognized from a cipher suite of security protocol(s), as in the example of FIG. 2. The cipher suite may be understood as a set of cryptographic/security methods, such as a key exchange method, a cryptographic method, a message authentication code (MAC), and the like. The cipher suite may use a combination of various known cryptographic/security methods. In the disclosure, a base station (RAN) and/or a network entity (e.g., UPF) may identify/recognize the security strength (SS(T)) of data traffic by using a function of a cipher suite, as shown in [Equation 3] above.

In operation 503, the UPF transmits the security strength (SS(T)) of data traffic identified in operation 502 to the base station and/or the SMF. Further, in operation 504, the SMF may configure a security policy and a security algorithm (method) that may be applied to the UE, based on the security strength (SS(T)) of data traffic and the security strength (SS(SR)) required by the network. At this time, based on the security strength (SS(SR)) required by the network and the security strength (SS(UP)) from the viewpoint point of the UP of the UE, the SMF may configure the security strength (SS(UP)) such that the security strength (SS(DRB)) from the viewpoint point of the DRB is greater than the security strength (SS(SR)). In operation 505, the base station may receive the configured security policy information and security strength (SS(DRB)) from the SMF.

In the disclosure, the security policy information may be configured, for example, as one of the following information of 1), 2), and 3). Based on the security policy information, the base station may determine whether to perform procedures for security activation with the UE. The security policy information may be configured as 2-bit information, for example, to indicate one of the following cases 1), 2), and 3). As an optional embodiment, when security is required, it would be possible to indicate only the information of 1) or to indicate one of the information of 1) and 3). Hereinafter, the operations of this embodiment are assumed to be performed when the security policy information indicates the information of 1) or 2).

1) "Required" (first information): The security activation procedure with the UE is required.
2) "Preferred" (second information): The security activation procedure with the UE may or may not be performed by the determination of the base station.
3) "Not Needed" (third information): The security activation procedure with the UE is not required.

In case that the security policy information indicates 3) "Not Needed", the base station does not perform the security activation procedure with the UE.

In operation 506, the base station may receive, from the UE, the UE security capability information. The UE security capability information may include, for example, at least one of integrity algorithm information that the UE may support and cryptographic algorithm information that the UE may support. For example, the UE may support an integrity algorithm such as NR integrity algorithm x (NIAx) and a cryptographic algorithm such as NR encryption algorithm x (NEAx) (where, "x" is 0, 1, 2, 3, ...). In addition, the security strength (SS) of the integrity algorithm and cryptographic algorithm supported by the UE may be one of the number of bits of {80, 112, 128, 192, 256, ...}, for example.

In operation 507, the base station may determine/identify/calculate the maximum security strength ($\max(SS(DRB_{UE})$) supportable by the UE and from the viewpoint point of the DRB, based on the security policy information and the security strength ($SS(DRB)$) received from the SMF in operation 505 and the UE security capability information received from the UE in operation 506. The maximum security strength ($\max(SS(DRB_{UE})$) may be defined as a function of using the maximum security strength ($\max(SS(UP_{UE}))$) that the UE can support in the user plane (UP) and the security strength ($SS(T)$) of data traffic, in the same manner as shown in [Equation 1] above. For example, in case that the security strength (SS) of the algorithm supportable by the UE according to the UE security capability information is 112 bits and the security strength ($SS(DRB)$) received from the SMF is 128 bits, the base station may determine/identify/calculate the maximum security strength ($\max(SS(DRB_{UE})$) with an upper limit of 128 bits. In addition, as an optional embodiment, the maximum security strength ($\max(SS(UP_{UE})$) of the user plane ($UP_{UE}$) that the UE can support may be different according to the security strength ($SS(UP)$) of the user plane (UP) that can be supported by the base station and the UE security capability information, and in this case, the security strength ($SS(UP)$) in [Equation 1] above may use the maximum security strength ($\max(SS(UP_{UE})$).

In operation 508, the base station may determine whether to accept or reject the security request from the UE, based on the maximum security strength ($\max(SS(DRB_{UE})$) and the security policy and security strength requirement information received from the SMF. In operation 509, when the base station determines that the maximum security strength ($\max(SS(DRB_{UE})$) from the viewpoint point of the DRB in consideration of the maximum security strength that the UE can support, satisfies the security strength ($SS(SR)$) required by the network or the $\max(SS(UP_{UE}))$ (e.g., $\max(SS(DRB_{UE})) \geq SS(SR)$) or $\max(SS(DRB_{UE})) \geq \max(SS(UP_{UE}))$), the base station may perform the procedure for security activation with the UE, based on the maximum security strength ($\max(SS(DRB_{UE})$), in operation 510. In the procedure for security activation, the base station may provide the UE with at least one of the integrity algorithm information and the cryptographic algorithm information. The UE may transmit and receive data traffic to and from the application server in a stable and secure state by using at least one of the integrity algorithm information and the cryptographic algorithm information.

FIG. 6 illustrates another example of a security configuration method using security strength (SS) in a wireless communication system according to an embodiment of the disclosure.

When comparing the example of FIG. 5 and the embodiment of FIG. 6, there is a difference in that in the example of FIG. 5, after a UE establishes a connection for transmitting and receiving data traffic to and from an external data network (DN), the SMF performs a security configuration for configuring a security policy and a security algorithm (method) to be applied to the UE, based on the security strength ($SS(T)$) of data traffic and the security strength ($SS(SR)$) required by the network, and provides security policy information and security strength ($SS(DRB)$) to a base station according to the security configuration. However, in the example of FIG. 6, the SMF performs a security configuration before the UE establishes a connection for transmitting and receiving data traffic to and from the external data network (DN), and may provide security policy information and security strength ($SS(DRB)$) to a base station according to the security configuration. Further, in the example of FIG. 5, the SMF selects the security strength ($SS(UP)$) of the user plane (UP) to satisfy $SS(DRB) \geq SS(SR)$, but in the example of FIG. 6, the base station selects the security strength ($SS(UP)$) of the user plane (UP) to satisfy $SS(DRB) \geq SS(SR)$ or $\max(SS(DRB_{UE}) \geq SS(SR)$.

Specifically, referring to FIG. 6, in operation 601, the SMF performs the security configuration to configure the security strength ($SS(SR)$), security policy, and/or security algorithm (method) required by the network. In this case, since the SMF performs the security configuration before the UE establishes a connection for transmitting and receiving data traffic to and from the DN, the SMF is assumed to have multiple security policies and/or multiple security algorithms (methods) for the security configuration in advance.

In operation 602, the SMF may provide the base station with security policy information and the security strength (SS(SR)) required by the network. The security policy information may be provided in the manner described in operation 505 of FIG. 5. Thereafter, in operation 603, the UE establishes a connection for transmitting and receiving data traffic to and from an external data network (DN). In operation 604, the UPF may decode security protocol(s) to identify/recognize the security strength (SS(T)) to be applied to the data traffic. The security strength (SS(T)) may be identified/recognized from a cipher suite of security protocol(s), as in the example of FIG. 2. The cipher suite may be understood as a set of cryptographic/security methods, such as a key exchange method, a cryptographic method, and a message authentication code (MAC). The cipher suite may use a combination of various known cryptographic/security methods. In the disclosure, a base station (RAN) and/or a network entity (e.g., UPF) may identify/recognize the security strength (SS(T)) of data traffic by using a function of a cipher suite, as shown in [Equation 3] above. In operation 605, the UPF transmits the security strength (SS(T)) of data traffic identified in operation 604 to the base station.

In operation 606, the base station may receive UE security capability information from the UE. As described in the example of FIG. 5, the UE security capability information may include at least one of integrity algorithm information that the UE may support and cryptographic algorithm information that the UE may support. In operation 607, the base station may determine/identify/calculate the maximum security strength (max(SS(DRB$_{UE}$))) supportable by the UE and from the viewpoint point of the DRB, based on the security policy information and the security strength (SS(SR)) received from the SMF in operation 602, the security strength (SS(T)) of data traffic received from the UPF in operation 605, and the UE security capability information received from the UE in operation 606. The maximum security strength (max(SS(DRB$_{UE}$))) may be defined as a function of using the security strength (SS(UP)) of the user plane (UP) and the security strength (SS(T)) of data traffic in the same manner as [Equation 1] above. At this time, the base station may select/determine the security strength (SS(UP)) of the user plane (UP) to satisfy SS(DRB) ≥ SS(SR) or max(SS(DRB$_{UE}$) ≥ SS in [Equation 1] above. In operation 608, the base station may, based on the maximum security strength (max(SS(DRB$_{UE}$))) and the security policy information received from the SMF, determine whether to accept or reject the security request from the UE. In case that, in operation 609, the maximum security strength (max(SS(DRB$_{UE}$))) satisfies the security strength (SS(SR)) required by the network (e.g., SS(DRB) ≥ SS(SR) or max(SS(DRB$_{UE}$) ≥ SS(SR)), the base station may perform the procedure for security activation with the UE, based on the maximum security strength (max(SS(DRB$_{UE}$))) in operation 610. In the procedure for security activation, the base station may provide the UE with at least one of integrity algorithm information and cryptographic algorithm information. The UE may transmit and receive data traffic to and from the application server in a stable and secure state by using at least one of the integrity algorithm information and the cryptographic algorithm information.

In addition, as an optional embodiment, in the embodiments of FIGS. 2 to 6, the base station may assign new data traffic (T$_{new}$) to the generated DRB$_i$ (where i is an index for classifying the user plane (UP$_i$)). The security strength (SS(DRB$_{i,new}$)) of DRB$_i$ to which new data traffic (T$_{new}$) is assigned may be defined as [Equation 4] below, and the base station (or SMF) may select/determine SS(SR) so as to satisfy the condition of SS(DRB$_{i,new}$) ≥ SS(SR). SS(UP$_i$) is the security strength of UP$_i$ mapped to DRB$_i$.

[Equation 4]

$$SS(DRB_{i,new}) = function(SS(UP_i), SS(T_{new})) \text{ for all i}$$

In addition, as an optional embodiment, in case that the same security policy and security algorithm (method) are configurable for multiple types of data traffic, the security strength (SS(T$_j$)) for data traffic T$_j$ (where j is an index for classifying different types of data traffic) in a DRB or PDU session in which the same security policy and security algorithm (method) are configured in the embodiments of FIG. 2 to FIG. 6 may be expressed as shown in [Equation 5] below.

[Equation 5]

$$SS(T_j) = function(Ciphersuite \ T_j)$$

In [Equation 5] above, "cipher suite T$_j$" is a cipher suite selected for the security of data traffic T$_j$ with respect to the UE.

The base station (or SMF) may select/determine the security strength (SS(UP)) of the user plane (UP) to satisfy SS(DRB) ≥ SS(SR) for all types of data traffic T$_j$, as shown in [Equation 6] below.

[Equation 6]

$$SS(DRB)=function(SS(UP),SS(T_1),SS(T_2),SS(T_3),...,SS(T_j))$$

$$SS(DRB)=function(SS(UP),\min(SS(T_j)))$$

[Equation 6] above exemplifies the case of using the minimum value as the security strength ($SS(T_j)$) for data traffic $T_j$. However, the case of using a suitable calculation formula or method to calculate the security strength, such as the maximum value or average value, is also possible.

Additionally, in an optional embodiment, when a security reconfiguration is required, the base station may list the security algorithms of the user plane ($UP_i$) that satisfy the security strength ($SS(SR)$) required by the network (e.g., can be provided from the SMF). Further, the base station may perform the security reconfiguration for the UE by selecting a suitable security algorithm from the listed security algorithms of the user plane ($UP_i$) so that the security strength ($SS(DRB_{i,j})$) satisfies the security strength ($SS(SR)$) ($SS(DRB_{i,J}) \geq SS(SR)$, where i is an index for classifying the user plane ($UP_i$) and j is an index for classifying the data traffic ($T_j$)) in [Equation 1] above.

The above embodiments of FIGS. 2 to 6 have described the operations in which the base station determines/identifies/calculates the maximum security strength ($\max(SS(DRB_{UE}))$) that can be supported by the UE, based on the security policy information and the security strength ($SS(DRB)$ or $SS(SR)$) received from the SMF and the UE security capability information received from the UE, and in which, when the maximum security strength ($\max(SS(DRB_{UE}))$) satisfies the security strength ($SS(SR)$) required by the network, the base station performs the procedure for security activation with the UE. However, when the maximum security strength ($\max(SS(DRB_{UE}))$) does not satisfy the security strength ($SS(SR)$) required by the network, a scheme for rejecting the security request from the UE may be required.

FIG. 7 illustrates a security request rejection operation in a security configuration method using security strength (SS) in a wireless communication system according to an embodiment of the disclosure. The embodiment of FIG. 7 may be applied when a security request is rejected in the embodiments of FIGS. 2 to 6 and the optional embodiments described above.

Referring to FIG. 7, in operation 701, a UE transmits a message requesting establishment of a connection of a user plane (UP) to a base station. In operation 702, the UE may receive security policy information and security strength ($SS(DRB)$) from the SMF, as in operation 505 of FIG. 5. As another example, although not shown in FIG. 7, in operation 702, the UE may receive security policy information and security strength ($SS(SR)$) from the SMF, as in operation 602 of FIG. 6.

Thereafter, the base station receives UE security capability information from the UE, determines/identifies/calculates the maximum security strength ($\max(SS(DRB_{UE}))$) supportable by the UE, and determines whether to accept or reject the user plane connection establishment request from the UE (which may correspond to a request in operation 701 of FIG. 7). Accordingly, operations 703 to 706 of determining whether the maximum security strength ($\max(SS(DRB_{UE}))$) satisfies the security strength ($SS(SR)$) required by the network or $\max(SS(UP_{UE}))$ may be performed in the same manner as operations 506 to 509 in the example of FIG. 5 or operations 606 to 609 in the example of FIG. 6.

In operation 706, in case that the maximum security strength ($\max(SS(DRB_{UE}))$) does not satisfy the security strength ($SS(SR)$ or $\max(SS(UP_{UE}))$) required by the network (e.g., in case that $\max(SS(DRB_{UE}) < SS(SR))$ or $\max(SS(DRB_{UE}) < \max(SS(UP_{UE}))$), the base station may transmit, to the UE, a response message rejecting the security request from the UE in operation 707.

In this case, when the security policy information indicates "Required," the response message in operation 707 may optionally include reason information indicating weak security strength as the reason for rejection. Further, in operation 708, the base station may notify the SMF of the reason for rejecting the security request, and the notification message may include the reason information. When the security policy information indicates "Required," although not shown in FIG. 7, the base station may, according to its determination, change the security configuration based on the UE security capability information. When the security policy information indicates "Not Needed," the base station does not perform a procedure for security activation with the UE.

FIG. 8 illustrates a security activation procedure between a UE and a base station in a security configuration method using security strength (SS) in a wireless communication system according to an embodiment of the disclosure. The embodiment of FIG. 8 may be applied to the embodiments of FIGS. 2 to 6 described above and the optional embodiments described above.

Operation 510 in the embodiment of FIG. 5 and operation 610 in the embodiment of FIG. 6 described above may be performed using the security activation procedure of FIG. 8.

In operation 801 of FIG. 8, the base station starts RRC integrity protection, and in operation 802, the base station transmits an access-stratum (AS) security mode command message to the UE. The AS security mode command message may include at least one of integrity algorithm (NIAx) information that the UE may support, cryptographic algorithm (NEAx) information that the UE may support, and message authentication code-integrity (MAC-I). In operation 803, the base station may start downlink ciphering, and in operation 804, the UE verifies an AS security mode command (SMC) and, if verification is successful, may start downlink deciphering. In operation 805, the UE transmits an AS security mode complete message including MAC-I to the base station in response to the AS security mode command message. In operation 806, the UE may start uplink ciphering, and in operation 807, the base station may start uplink deciphering. In the example of FIG. 8, operations 803 and 804 are shown to be performed before operation 805, but this is only an example, and operations 803 and 804 may be performed after operation 805. Meanwhile, with respect to the integrity algorithm (NIAx) and cryptographic algorithm (NEAx) that the UE may support, the base station may determine/select/calculate the security strength (SS(NIAx), SS(NEAx)) of the integrity algorithm (NIAx) and cryptographic algorithm (NEAx) as the security strength (SS(UP)) in the user plane (UP).

FIG. 9 illustrates an example of a configuration of a network entity in a wireless communication system according to an embodiment of the disclosure.

A network entity of FIG. 9 may be one of the network functions (NFs) such as, the UE, the base station (RAN), the SMF, and the UPF, described in the embodiments of FIGS. 1 to 8.

A network entity according to an embodiment of the disclosure may include a processor 901 that controls the overall operation of the network entity, a transceiver 903 including a transmitter and a receiver, and memory 905. Of course, it is not limited to the above example, and the network entity may include more or fewer configurations than the configuration shown in FIG. 9.

According to an embodiment of the disclosure, the transceiver 903 may transmit and receive signals to and from at least one of other network entities or a UE. Signals being transmitted and received may include at least one of control information and data. When the network entity of FIG. 9 is an entity of a core network, the transmitted and received signals between the network entity and the UE may be transmitted and received via a base station (RAN). When the network entity of FIG. 9 is a base station (RAN), the transceiver 903 may include a first transceiver for transmitting and receiving signals to and from the UE via a wireless network, and a second transceiver (e.g., a communication interface) for transmitting and receiving signals wired or wirelessly to and from other network entities of the core network.

According to an embodiment of the disclosure, the processor 901 may generally control the operation of the network entity to perform an operation according to one or a combination of two or more of the embodiments of FIGS. 1 to 8 described above. Meanwhile, the processor 901, the transceiver 903, and the memory 905 need not be implemented as separate modules, and may of course be implemented as a single element in the form of a single chip. In addition, the processor 901 may be an application processor (AP), a communication processor (CP), a circuit, an application-specific circuit, or at least one processor. The transceiver 903 may include at least one communication interface for transmitting and receiving signals wired/wirelessly to and from other network entities.

According to an embodiment of the disclosure, the memory 905 may store data such as basic programs, applications, and configuration information for the operation of the corresponding network entity. In addition, the memory 905 provides the stored data upon request from the processor 901. The memory 905 may be configured by a storage medium such as, ROM, RAM, hard disk, CD-ROM, and DVD, or a combination of storage media. Additionally, there may be multiple memories 905. In addition, the processor 901 may perform at least one of the embodiments described above, based on a program stored in the memory 905 and for performing an operation according to at least one of the above-described embodiments of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure. Also, the above respective embodiments may be employed in combination, as necessary.

**Claims**

1. A method performed by a base station for security configuration in a wireless communication system, the method comprising:

   receiving security policy information from a network entity managing a session of a UE;
   receiving UE security capability information from the UE;
   identifying a first security strength supported by the UE, based on the security policy information and the security capability information; and
   in case that the first security strength is greater than a second security strength required by a network, performing a security activation procedure with the UE.

2. The method of claim 1, wherein the first security strength is defined as a function of the second security strength and a third security strength of data traffic of the UE.

3. The method of claim 1, wherein the network entity is a session management function (SMF), and
   wherein the receiving of the security policy information comprises receiving the security policy information and a fourth security strength for a data radio bearer (DRB) from the SMF, and the first security strength is identified based on the UE capability information and the fourth security strength.

4. The method of claim 1, wherein the network entity is an SMF, and
   wherein the receiving of the security policy information comprises receiving the security policy information and the second security strength from the SMF.

5. The method of claim 1, wherein the security policy information indicates one of first, second, and third information,

   wherein the first information indicates that the security activation procedure is required between the base station and the UE,
   wherein the second information indicates that the security activation procedure is able to be performed by determination of the base station, and
   wherein the third information indicates that the security activation procedure is not required.

6. The method of claim 1, wherein the performing of the security activation procedure comprises providing at least one of integrity algorithm information and cryptographic algorithm information for the security configuration to the UE, based on the first security strength.

7. The method of claim 1, further comprising:

   in case that the first security strength is less than the second security strength required by the network, transmitting a first message rejecting a security request from the UE; and
   transmitting a second message including reason information for the rejection to the network entity.

8. The method of claim 1, wherein the UE security capability information comprises at least one of integrity algorithm information and cryptographic algorithm information supportable by the UE.

9. A base station in a wireless communication system, comprising:

   a transceiver;
   a communication interface; and
   a processor configured to:

   receive, through the communication interface, security policy information from a network entity managing a session of a UE;
   receive UE security capability information from the UE through the transceiver;

identify a first security strength supported by the UE, based on the security policy information and the security capability information; and

in case that the first security strength is greater than a second security strength required by a network, perform a security activation procedure with the UE through the transceiver.

**10.** The base station of claim 9, wherein the base station is adapted to operate according to the method of one of claims 2 to 8.

**11.** A method performed by a UE for security configuration in a wireless communication system, the method comprising:

transmitting UE security capability information of the UE to a base station that receives security policy information from a network entity managing a session of the UE; and

in response to a case in which a first security strength supported by the UE is greater than a second security strength required by a network, performing a security activation procedure with the base station.

**12.** The method of claim 11, wherein the first security strength is defined as a function of the second security strength and a third security strength of data traffic of the UE.

**13.** A UE in a wireless communication system, comprising:

a transceiver; and
a processor configured to:

transmit, through the transceiver, UE security capability information of the UE to a base station that receives security policy information from a network entity managing a session of the UE; and

in response to a case in which a first security strength supported by the UE is greater than a second security strength required by a network, perform a security activation procedure with the base station through the transceiver.

**14.** The UE of claim 13, wherein the first security strength is defined as a function of the second security strength and a third security strength of data traffic of the UE.

FIG. 1

| UE | RAN | SMF | UPF | DN |
|---|---|---|---|---|

201 — Establish connection for transmitting and receiving data traffic

202 — Identify security strength (SS)

Security strength (SS(T)) — 203

Security configuration — 204

Security policy information and security strength (SS(DRB)) — 205

206 — Security activation

# FIG. 2

FIG. 3

EP 4 615 027 A1

FIG. 4

| UE | RAN | SMF | UPF | DN |
|----|-----|-----|-----|-----|

501 — Establish connection for transmitting and receiving data traffic

502 — Identify security strength (SS)

Security strength (SS(T)) — 503

Security configuration — 504

Security policy information and security strength (SS(DRB))

UE security capability information — 505

506 — UE security capability information

Calculate maximum security strength $(maxSS(DRB_{UE}))$ supported by UE — 507

Determine whether to accept or reject security request from UE, based on maximum security strength $(maxSS(DRB_{UE}))$ and security policy — 508

Whether maximum security strength $(maxSS(DRB_{UE}))$ satisfies security strength (SS(SR)) required by network? — 509

Yes

510 — Security activation

FIG. 5

| UE | RAN | SMF | UPF | DN |
|---|---|---|---|---|

601 — Security configuration

Security policy
and security
strength (SS(SR))
602

Establish connection for transmitting and receiving data traffic
603

604 — Identify security strength (SS)

Security strength (SS(T))
605

UE security
capability information
606

Calculate maximum security strength
$(maxSS(DRB_{UE}))$ supported by UE — 607

Determine whether to accept or reject
security request from UE, based on
maximum security strength
$(maxSS(DRB_{UE}))$ and security policy — 608

Whether
maximum security
strength $(maxSS(DRB_{UE}))$
satisfies security strength
(SS(SR)) required by
network? — 609

Yes

Security activation
610

# FIG. 6

UE     RAN     SMF

User plane (UP)
connection establishment request

701

Security policy and
security strength (SS(DRB))

702

UE security capability information

703

Calculate maximum security strength
$(maxSS(DRB_{UE}))$ supported by UE

704

Determine whether to accept or reject security
request from UE, based on maximum security
strength $(maxSS(DRB_{UE}))$ and security policy

705

706

Whether maximum security strength
$(maxSS(DRB_{UE}))$ satisfies security strength
(SS(SR)) required by network?

No

Reject security request from UE

707

Notify of rejection reason
(e.g. weak security strength)

708

FIG. 7

FIG. 8

901     903

Processor ⟷ Transceiver

905

Memory

## FIG. 9

## INTERNATIONAL SEARCH REPORT

| International application No. |
| --- |
| **PCT/KR2022/018651** |

**A.    CLASSIFICATION OF SUBJECT MATTER**

**H04W 12/67**(2021.01)i; **H04W 12/37**(2021.01)i; **H04W 12/03**(2021.01)i; **H04W 12/10**(2009.01)i; **H04W 8/24**(2009.01)i

According to International Patent Classification (IPC) or to both national classification and IPC

**B.    FIELDS SEARCHED**

Minimum documentation searched (classification system followed by classification symbols)

H04W 12/67(2021.01); H04L 29/06(2006.01); H04W 12/06(2009.01); H04W 12/37(2021.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: security policy, security capability, security strength, SMF, DRB

**C.    DOCUMENTS CONSIDERED TO BE RELEVANT**

| Category* | Citation of document, with indication, where appropriate, of the relevant passages | Relevant to claim No. |
| --- | --- | --- |
| A | HUAWEI et al. UP Security policy requirement on the IMS data network. S3-212642, 3GPP TSG-SA3 Meeting #104-e, e-meeting. [online]. 09 August 2021.<br>    See section 6.6.1. | 1-14 |
| A | CHINA TELECOM. Discussion on UP security policy updated by intra-cell handover. R2-2111200, 3GPP TSG-RAN WG2 Meeting #116e. [online]. 22 October 2021.<br>    See section 2. | 1-14 |
| A | CHINA TELECOM (MODERATOR). Summary of Offline Discussion on CB#114 Security Indication. R3-214270, 3GPP TSG-RAN WG3 #108-e. [online]. 30 August 2021.<br>    See section 3.1. | 1-14 |
| A | US 2021-0274346 A1 (SAMSUNG ELECTRONICS CO., LTD.) 02 September 2021 (2021-09-02)<br>    See paragraphs [0164]-[0165]; and figure 8. | 1-14 |
| A | US 2021-0289359 A1 (HUAWEI TECHNOLOGIES CO., LTD.) 16 September 2021 (2021-09-16)<br>    See paragraphs [0177]-[0212]; and claim 1. | 1-14 |

☐ Further documents are listed in the continuation of Box C.         ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **16 August 2023** | **17 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/018651**

| Patent document cited in search report | | | Publication date (day/month/year) | Patent family member(s) | | | Publication date (day/month/year) |
|---|---|---|---|---|---|---|---|
| US | 2021-0274346 | A1 | 02 September 2021 | KR | 10-2020-0002506 | A | 08 January 2020 |
| | | | | KR | 10-2449988 | B1 | 05 October 2022 |
| | | | | US | 11546759 | B2 | 03 January 2023 |
| | | | | WO | 2020-004986 | A1 | 02 January 2020 |
| US | 2021-0289359 | A1 | 16 September 2021 | CN | 107566115 | A | 09 January 2018 |
| | | | | CN | 107566115 | B | 14 January 2022 |
| | | | | CN | 109314638 | A | 05 February 2019 |
| | | | | CN | 109314638 | B | 14 January 2022 |
| | | | | CN | 109560929 | A | 02 April 2019 |
| | | | | CN | 109560929 | B | 16 June 2020 |
| | | | | CN | 114285570 | A | 05 April 2022 |
| | | | | EP | 3481000 | A1 | 08 May 2019 |
| | | | | EP | 3481000 | B1 | 20 April 2022 |
| | | | | EP | 4135256 | A1 | 15 February 2023 |
| | | | | JP | 2019-527498 | A | 26 September 2019 |
| | | | | JP | 6737910 | B2 | 12 August 2020 |
| | | | | KR | 10-2019-0015562 | A | 13 February 2019 |
| | | | | KR | 10-2144303 | B1 | 13 August 2020 |
| | | | | US | 11057775 | B2 | 06 July 2021 |
| | | | | US | 11689934 | B2 | 27 June 2023 |
| | | | | US | 2019-0124502 | A1 | 25 April 2019 |

Form PCT/ISA/210 (patent family annex) (July 2022)